# EUROPEAN PATENT SPECIFICATION

(11) **EP 3 463 980 B1**
(45) Date of publication and mention of the grant of the patent: **03.05.2023**
(21) Application number: 17726933.9
(22) Date of filing: 30.05.2017
(51) Int. Cl.: B60Q 1/26, B60R 1/12, F21S 43/14, F21S 43/237, F21S 43/27

(54) **A LAMP ASSEMBLY FOR A VEHICLE**
LAMPENANORDNUNG FÜR EIN FAHRZEUG
ENSEMBLE LAMPE POUR VÉHICULE

(30) Priority: 01.06.2016 AU 2016902106
(43) Date of publication of application: 10.04.2019
(73) Proprietor: SMR Patents S.à.r.l., 2453 Luxembourg (LU)
(72) Inventor: BELCHER, Simon, South Plympton South Australia 5038 (AU); DICKSON, Jay, Australia, SA 5160 (AU)
(74) Representative: Weber-Bruls, Dorothée
(86) International application number: PCT/EP2017/063034
(87) International publication number: WO 2017/207567

(56) References cited:
- EP-A1- 2 746 106
- EP-A1- 2 774 814
- EP-A1- 2 803 532
- EP-A2- 1 914 118
- DE-A1-102005 013 682
- DE-A1-102012 211 821
- US-A1- 2011 170 307
- US-A1- 2016 059 773

## Description

### TECHNICAL FIELD

The present invention relates to lamp assemblies. In a particular form the present invention relates to lamp assemblies for an exterior rear view assembly of a vehicle, in line with the preamble of claim 1.

### BACKGROUND

Automotive lighting arrangements are increasingly being used in vehicle rear view systems (such as exterior rear view mirror assemblies) as value added features required by automotive manufacturers. An example of this is rear view mirror assemblies that are manufactured with supplementary side direction indicators (or side turn signal indicator) lights, which are operated by the driver to signal their intention to change the direction in which the vehicle is proceeding. Light emitting diodes (LEDs) are also being used more frequently as the light source in these lighting arrangements.

EP 2 774 814 A1 discloses a mirror indicator having a housing whose rear portion is made of opaque plastic material and is fixed to a rear portion of housing. A main optical waveguide is made of transparent plastic material. A light source is coupled to first end face of the main optical waveguide and to rear portion of housing facing away from the shell side of main optical waveguide. The rear portion of housing and either the main optical waveguide or separate auxiliary optical fiber are integrally formed by a 2-component injection-molded portion.

Still further, EP 2 803 532 A1 refers to a mirror device for motor vehicles. It comprises an outer housing with a cover having a (PVD) coating; a lens; and illumination means such as LEDs, light guides, light emitting surfaces and/or blinkers. The lens has a first area internal to the cover, and a second, transparent area extending to one side of the outer housing. The cover has a first cover element external to the lens and of a nature such that the illumination means are visible from the exterior when they are on and not visible from the exterior when they are off. The cover has a substantially opaque second cover element having an overlapping portion between the first area of the lens and the first cover element.

From US 2016/0059773 A1 a coated polymeric substrate is known. The polymeric substrate is coated with a chromium-based reflective coating, and the polymeric substrate and the chromium-based reflective coating are at least in part permeable to light originating from at least one light element, wherein the coating is an alloy of chromium and a dopant material, the dopant material being selected from the hexagonally close-packed transition metals, the alloy having a crystal structure of a primary body-centered cubic phase in coexistence with a secondary omega hexagonally close-packed phase.

DE 10 2012 211 821 A1 discloses a light unit for vehicle in particular the lamp unit having a housing shell defining an interior space for containing light sources and associated light-guiding elements. The housing shell is made of thermoplastic plastic material and manufactured by an injection molding process. A transparent window portion is formed in the housing shell. The light-guiding elements are formed in one-piece with the housing shell during injection molding process. The light guide element is formed with a coupling-out structure. A reflective layer is formed on the side opposite to the window portion of the surface portion of a covering shell.

From DE 10 2005 013 682 A1 a rear view mirror for a vehicle is known. In particular, The exterior rearview mirror has a mirror head and a housing which has a recess for a repeater flashing indicator, which is provided with a lens and a light guide, in which at least one light source can be coupled light. In order to form the exterior rearview mirror so that in a structurally simple, cost-effective training optimal lighting function is achieved, the light guide extends on the outside of the lens and protrudes through the lens into the housing, so that the light coupling element is within the housing. The corresponding bulb is therefore not visible from the outside. The exterior rearview mirror is particularly suitable for motor vehicles. With the light guide, the legal requirements regarding the light values when flashing are met and a uniform illumination is achieved.

US 2011/170307 A1 describes a vehicle lamp comprising a common substrate; a plurality of LED light sources arranged on the common substrate; a light guiding lens elongated in a direction in which the LED light sources are aligned; and a plurality of reflecting sections provided on the light guiding lens and configured to individually reflect incident lights from the respective LED light sources to a periphery of a vehicle, wherein respective directions of the reflecting sections are made to differ in accordance with positions of the corresponding LED light sources.

EP 2 746 106 A1 teaches a vehicle component comprising: a molded cover molded into a shape of a surface of a part attached to a vehicle; and a surface-emitting device bonded or fitted and fixed along a back face of the molded cover, wherein the molded cover is vacuum formed by solid decorative molding of a translucent resin molded member with a translucent film, and light from the surface-emitting device is transmitted through the molded cover and emerges in a predetermined light-emitting area which is a part of a surface of the vehicle component.

EP 1 914 118 A2 describes an exterior rearview mirror for vehicles with a mirror head, which is provided with a mirror glass and in which at least one lamp is housed, which emits light through at least one transparent area, and with a mirror base, wherein at least part of the housing of the mirror head and / or of the housing of the mirror base is made of at least two plastic layers, which have different light transmittance, and that in the transparent area the plastic layer with the lower light transmittance is missing or only has such a thickness that the light emitted by the lamp is sufficient Luminous intensity radiates outwards.

It is desirable to provide a lighting arrangement which provides both a forward projecting light output (known as a cosmetic light due to it being for aesthetic rather than regulatory or compliance purposes) and a rear projecting light output (known as a compliance light) having a required photometric output for legal compliance purposes (for example, the requirements of Australian Design Rule 6/00 - Direction Indicators).

Light emitting devices within rear vision assemblies that employ an internal light pipe, or a light pipe integrated into an exterior lens are known. It is also known to weld such light pipes to a rear housing to achieve both cosmetic and regulatory requirements. However, this solution may not always be possible due to packaging and design requirements.

It is against this background and the problems and difficulties associated therewith that the present invention has been developed. That is, it is the object of the present invention to further develop the known lamp assemblies for an exterior rear view assembly of a vehicle to overcome the drawbacks of the prior art.

### SUMMARY

This object is achieved by the features of the characterizing part of claim 1. Preferred embodiments are described in claims 2 to 9.

According to a first aspect of the present invention, there is provided a lamp assembly adapted to be integrated into an exterior rear view mirror assembly for a vehicle including:
- a housing;
- an outer lens partially covering the housing to define an enclosure between the housing and lens; a light emitting diode (LED) light source arranged in the enclosure; and a light guide forming part of the housing, the light guide having a light receiving surface within the enclosure and a light emitting surface outside the enclosure, such that light emitted from the LED light source is received by the light receiving surface of the light guide and directed toward the light emitting surface of the light guide, such that light is output from the light guide.

According to the invention, the lamp assembly provides a cosmetic light configured to provide light output generally forward of the vehicle and a compliance light configured to provide light output over a viewing angle of a least 55 degrees in a plane, and the outer lens includes an opaque inner portion and a light transmissive outer portion, wherein the opaque inner portion includes an elongate opening to allow light to transmit through the outer portion, the lamp assembly further including an elongate cosmetic light pipe for guiding light from at least one light source to an elongate light emitting surface, wherein the elongate light pipe is housed within the enclosure such that the light emitting surface of the light pipe is adjacent to the elongate opening of the inner portion, and the compliance light guide features a mid-section with a reduced cross sectional area, and the outer lens features a complimentary cut out, wherein when the out lens is welded to the housing and compliance light guide so form a sealed enclosure over a viewing angle of at least 55 degrees in a plane, the mid-section nests within the cut out, wherein the lamp enclosure is weatherproof.

Preferably, the light is output from the light guide with a substantially uniform luminance.

Preferably, the plane is a horizontal plane.

Preferably, the light emitting surface of the light guide includes surface optics to diffuse light output from the light emitting surface.

Preferably, excepting the light guide forming part of the housing, the housing is opaque.

Preferably, the light guide is clear.

The lamp enclosure is weatherproof.

### BRIEF DESCRIPTION OF DRAWINGS

Embodiments of the present invention will be discussed with reference to the accompanying drawings wherein:
Figure 1 is a rear perspective view of a lamp assembly integrated into an exterior rear view mirror assembly according to an embodiment of the invention;
Figure 2 is a front perspective view of the assembly of Figure 1 ;
Figure 3 is a side perspective view of the assembly of Figure 1 ;
Figure 4 is a cross sectional view of the lamp assembly including the minimum horizontal angle of light distribution in space to be provided by the compliance light;
Figure 5 is a front perspective view of the lamp assembly with its outer lens removed;
Figure 6 is a detailed front perspective view of the lamp assembly of Figure 5;
Figure 7 is a front perspective view of the lamp assembly of figure 5 including the outer lens;
Figure 8 is a rear perspective view of the lamp assembly of Figure 7;
Figure 9 is a rear perspective view of the outer lens; and
Figure 10 is a rear perspective view of a lamp assembly integrated into an exterior rear view mirror assembly according to an alternative embodiment of the invention.

### DESCRIPTION OF EMBODIMENTS

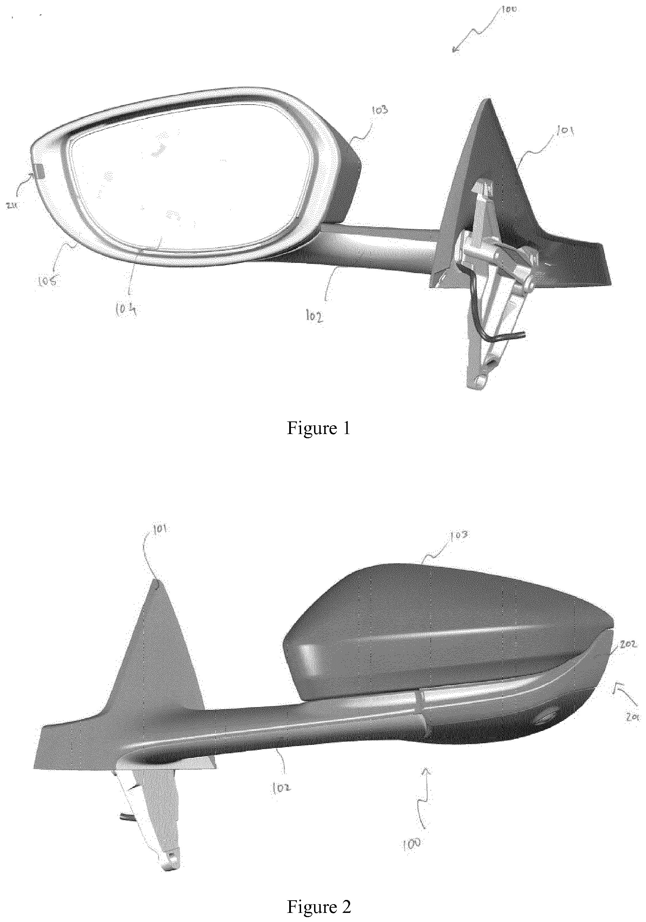

Referring to Figures 1 to 3, there is shown a lamp assembly 200 integrated into an exterior rear view mirror assembly 100. The mirror assembly comprises a vehicle mounting portion 101 for mounting the assembly to the side of a vehicle, and a base frame 102 in connection with the vehicle mounting portion 101 for supporting the remainder of the mirror assembly 100. The lamp assembly 200 is supported by the base frame 102, and is enclosed by an outer case 103, which also houses the rear view mirror 104 and mirror surround 105.

The lamp assembly 200 provides a cosmetic light configured to provide light output generally forward of the vehicle. The lamp assembly 200 also provides a compliance light configured to provide light output to an area required by law.

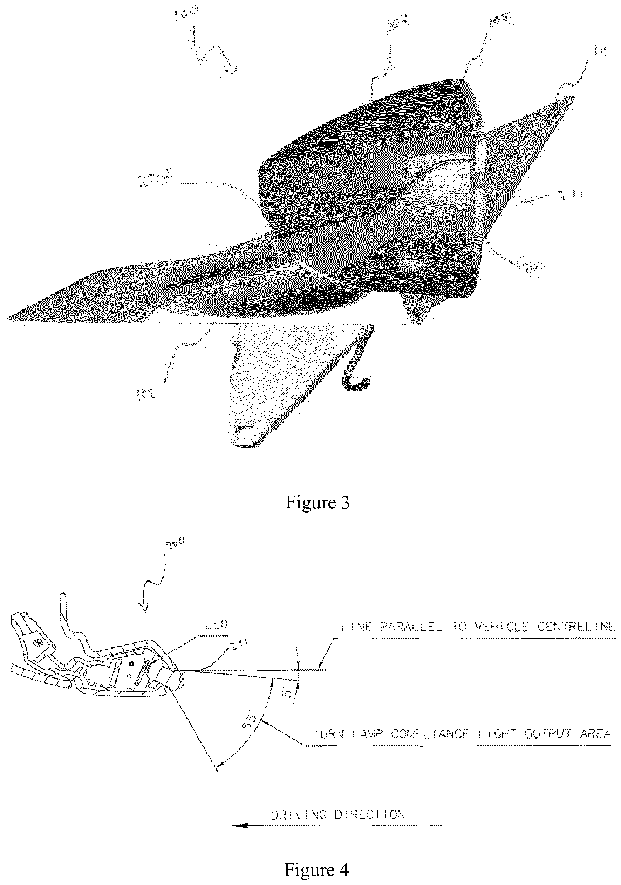

Referring now to Figure 4, where there is shown a schematic top view of the minimum horizontal angle of light distribution in space to be provided by the compliance light, as required by Australian Design Rule 6/00 - Direction Indicators. It can be seen that the light output is required to be provided in a minimum 5 degree arc offset 5 degrees from a line parallel to the vehicle centreline. In this embodiment, the compliance light is configured to comply with these requirements.

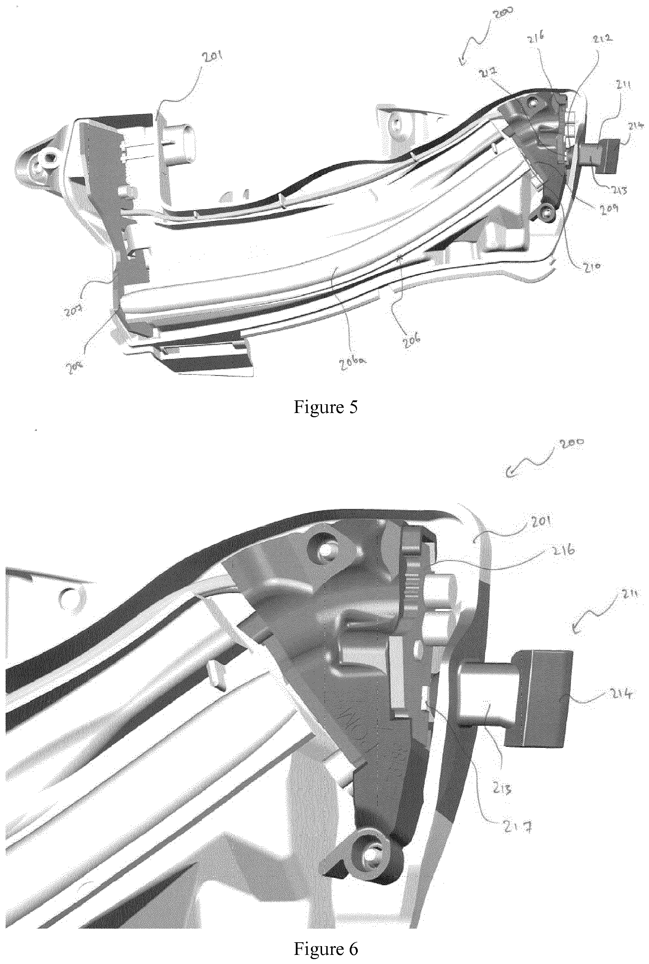

Referring now to Figures 5 and 6, where there is shown the lamp assembly 200, with its outer lens removed to show the lamp housing 201 and compliance light guide 211. In one embodiment, the housing 201 and compliance light guide 211 are formed in a two shot injection moulding process. First, the housing 201 is moulded from black acrylonitrile butadiene styrene (ABS) or other suitable opaque substrate, then the compliance light guide 211 is overmoulded using an acrylic (PMMA) or other suitable clear or transparent substrate.

In an alternative embodiment, the lamp housing 201 and compliance light guide 211 may instead be separate components welded together.

The lamp housing 201 supports and houses an elongate cosmetic light pipe 206, with an elongate light emitting surface 206a, the light pipe 206 being illuminated at its first and second ends by a first end PCB 207 and light source 208 and a second end PCB 209 and light source 210 respectively. The lamp housing 201 also supports and houses a PCB 216 and light source 217 for illuminating the compliance light guide 211.

In one embodiment, the light sources 208, 209, 217 may be light emitting diodes (LEDs).

The cosmetic light pipe 206 is manufactured from a clear plastic (such as PMMA) and is adapted to be substantially transparent when in an un-lit state while being diffusive in a lit-state. When lit, light exits the light emitting surface 206a of the cosmetic light pipe 206 with substantially uniform luminous intensity along its length. This may be achieved by using surface optics along its length to distribute the light evenly along its length. Alternatively, the cosmetic light pipe 206 may be filled with light scattering particles, where most light rays that enter the light pipe 206 will encounter the light scattering particles that alter the direction of the rays. The effect of this light scattering is that light rays will spread throughout the light pipe 206, such that an even distribution of light output from the light emitting surface 206a occurs.

The light scattering particles may be titanium dioxide particles of sufficient size and concentration such that the light pipe 206 appears transparent when un-lit while providing a substantially uniform luminous intensity surface output when lit.

As can be seen more clearly in Figure 6, the light source 217 is immediately adjacent the light receiving surface 212 of the compliance light guide 211, such that light emitted from the light source is received by the light receiving surface 212 of the light guide 211, passes through the mid-section 213 and is directed toward the light emitting surface 214 of the light guide 211, such that light is output from the light guide 211 such that at least the minimum horizontal angle of light distribution in space is achieved.

In one embodiment, the light emitting surface 214 may have surface optics present to diffuse light output from the light emitting surface. In a further embodiment, the light guide 211 may be configured such that light is output from the light guide 211 with a substantially uniform luminance.

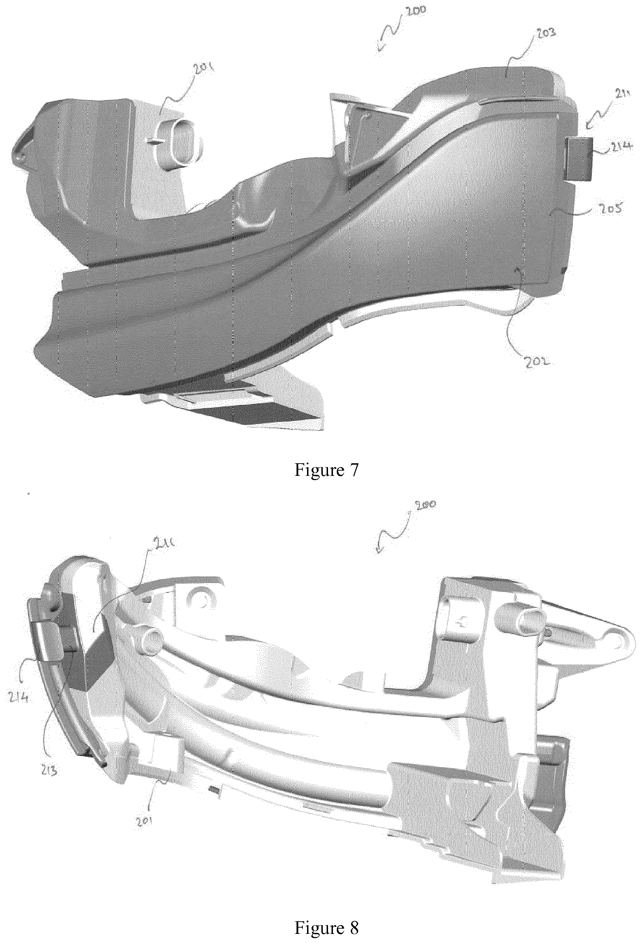

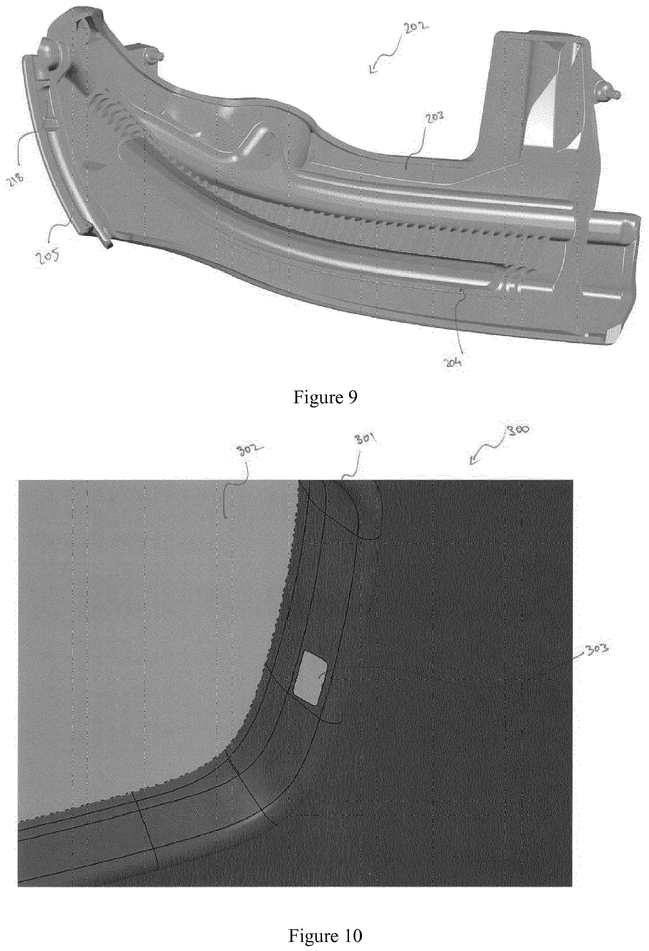

Referring now to Figures 7 and 8, where there is shown the lamp assembly 200, including the outer lens 202. The outer lens 202 is formed in a two shot injection moulding process, comprising an opaque inner portion 203 and a light transmissive outer portion 205. As best shown in Figure 9, the opaque inner portion 203 has an elongate opening 204 to allow light emitted from the adjacent light emitting surface 206a of the light pipe 206 to transmit through the light transmissive outer portion 205. The opaque inner portion 203 is manufactured from an opaque plastic (such as ABS), and the light transmissive outer portion 205 is manufactured from a clear or tinted plastic (such as PMMA).

In alternative embodiments, the outer lens 202 may be a single component having an opaque coating on an inner surface formed by example by applying paint or a thin film coating. The light transmissive window 203 may be formed by etching away the opaque coating or masking the area before coating.

The outer lens 202 and housing 201 (including the overmoulded compliance light guide 211) are welded together using hot plate welding and as best shown in Figure 7, define a sealed, weatherproof enclosure housing the cosmetic light pipe 21, PCBs 207, 209, 216 and light sources 208, 210, 217.

As best shown in Figures 2 and 3, the exterior rear view mirror assembly 100 is configured such that the light receiving surface 212 of the compliance light guide 211 is within the enclosure, and the light emitting surface of the compliance light guide 211 is outside the enclosure, such that the only externally visible components of the lamp assembly 200 are the outer lens 202 and the light emitting surface 214 of the compliance light guide 211. It will be appreciated that the co-moulding or welding of the compliance light guide 211 to the housing 201 allows for it to be an external feature, while the enclosure remains fully sealed.

As best seen in Figure 5, the compliance light guide 211 features a mid-section 213 with a reduced cross sectional area. As shown in Figure 9, the outer lens 202 features a complementary cut out 218, wherein when the outer lens 202 is welded to the lamp housing 201 and compliance light guide 211 to form the sealed enclosure, the mid-section 213 nests within the cut out 218. The mirror surround 105 has a similar cut out (not shown) which also encloses the mid-section 213. such that the only visible component of the compliance light guide is the light emitting surface 214.

Referring now to Figure 10, where there is shown a rear perspective view of an exterior rear view mirror assembly 300 according to an alternative embodiment. This embodiment includes the additional feature of a compliance light guide with a second light emitting surface 303 which is directed toward the driver of the vehicle and employed as a tell tale light to notify the driver that the compliance light is illuminated.

## Claims

1. A lamp assembly (200) adapted to be integrated into an exterior rear view mirror assembly (100) for a vehicle including:
- a housing (201);
- an outer lens (202) partially covering the housing (201) to define an enclosure between the housing (201) and lens (202);
- a light emitting diode (LED) light source (217) arranged in the enclosure; and
- a light guide (211) forming part of the housing (201), the light guide (211) having a light receiving surface (212) within the enclosure and a light emitting surface (214) outside the enclosure, such that light emitted from the LED light source (217) is received by the light receiving surface (212) of the light guide (211) and directed toward the light emitting surface (214) of the light guide (211), such that light is output from the light guide (211),
wherein the lamp assembly (200) provides a cosmetic light configured to provide light output generally forward of the vehicle and a compliance light configured to provide light output over a viewing angle of at least 55 degrees in a plane, with the light guide (211) being a compliance light guide (211) featuring a mid-section (213) with a reduced cross sectional area, and
**characterized in that**
the outer lens (202) includes an opaque inner portion (203) and a light transmissive outer portion (205), wherein the opaque inner portion (203) includes an elongate opening (204) to allow light to transmit through the outer portion (205) with an elongated cosmetic light pipe (206), which is further included in the lamp assembly (200) for guiding light from at least one light source (208) to an elongate light emitting surface (206a) being housed within the enclosure such that the light emitting surface (206a) of the light pipe (206) is adjacent to the elongate opening (204) of the inner portion, and
the outer lens (202) features a cut out (218) complementary to the mid-section (213) of the compliance light guide (211), wherein when the outer lens (202) is welded to the housing (201) and compliance light guide (211) to form a sealed enclosure, the mid-section (213) nests within the cut out (218), wherein the lamp enclosure is weatherproof.

2. The lamp assembly (200) as claimed in claim 1, wherein the light is output from the light guide (211) with a substantially uniform luminance.

3. The lamp assembly (200) as claimed in any of the preceding claims, wherein the plane is a horizontal plane.

4. The lamp assembly (200) of any of the preceding claims, wherein the light emitting surface (214) of the light guide (211) includes surface optics to diffuse light output from the light emitting surface (214).

5. The lamp assembly (200) of any of the preceding claims, wherein the housing (201),
excepting the light guide (211) forming part of the housing (201), is opaque.

6. The lamp assembly (200) of any of the preceding claims, wherein the light guide (211) is clear.

7. The lamp assembly (200) of any of the preceding claims, wherein the elongated light pipe (206) has a substantially uniform luminous intensity along its length.

8. The lamp assembly (200) of claim 7, wherein the substantially uniform luminous intensity along its length is achieved by
- using surface optics along its length to distribute the light evenly along its length, or
- the light pipe (206) being filled with light scattering particles, where most light rays that enter the light pipe (206) will encounter the light scattering particles that alter the direction of light rays, where this light scattering is that light rays are spread throughout the light pipe (206) such that an even distribution of light output from the light emitting surface (206a) occurs.

9. The lamp assembly (200) of any of the preceding claims, wherein the elongated light pipe (206) being illuminated at its first and second ends by a first end PCB (207) and light source (208) and a second end PCB (209) and another light source (210).

## Patentansprüche

1. Lampenanordnung (200), die dazu ausgelegt ist, in eine Außenrückspiegelanordnung (100) für ein Fahrzeug integriert zu werden, umfassend:
- ein Gehäuse (201);
- eine äußere Linse (202), die das Gehäuse (201) teilweise abdeckt, um zwischen dem Gehäuse (201) und der Linse (202) eine Einhausung zu definieren;
- eine lichtemittierende Diode (LED) als Lichtquelle (217), die in der Einhausung angeordnet ist; und
- einen Lichtleiter (211), der einen Teil des Gehäuses (201) ausbildet, wobei der Lichtleiter (211) eine lichtempfangende Oberfläche (212) innerhalb der Einhausung und eine lichtemittierende Oberfläche (214) außerhalb der Einhausung aufweist, sodass Licht, das von der LED-Lichtquelle (217) emittiert wird, von der lichtempfangenden Oberfläche (212) des Lichtleiters (211) empfangen und zu der lichtemittierenden Oberfläche (214) des Lichtleiters (211) geführt wird, sodass Licht von dem Lichtleiter (211) ausgegeben wird,
wobei die Lampenanordnung (200) ein Verschönerungslicht, das dazu ausgestaltet ist, Licht bereitzustellen, das in Bezug auf das Fahrzeug allgemein nach vorne ausgegeben wird, und ein vorschriftsgemäßes Licht, das dazu ausgestaltet ist, Licht bereitzustellen, das über einen Blickwinkel von mindestens 55 Grad in einer Ebene ausgegeben wird, bereitstellt, wobei der Lichtleiter (211) ein Lichtleiter für vorschriftsgemäßes Licht (211) ist, der einen mittleren Abschnitt (213) mit einer reduzierten Querschnittsfläche aufweist, und
**dadurch gekennzeichnet, dass**
die äußere Linse (202) einen opaken inneren Abschnitt (203) und einen lichtdurchlässigen äußeren Abschnitt (205) umfasst, wobei der opake innere Abschnitt (203) eine längliche Öffnung (204) umfasst, um Licht durch den äußeren Abschnitt (205) durchzulassen, wobei ein länglicher Verschönerungslichtkanal (206), der ferner in der Lampenanordnung (200) enthalten ist, um Licht von mindestens einer Lichtquelle (208) zu einer länglichen lichtemittierenden Oberfläche (206a) zu leiten, so innerhalb der Einhausung untergebracht ist, dass die lichtemittierende Oberfläche (206a) des Lichtkanals (206) der länglichen Öffnung (204) des inneren Abschnitts benachbart ist, und
die äußere Linse (202) eine Aussparung (218) aufweist, die komplementär zu dem mittleren Abschnitt (213) des Lichtleiters für vorschriftsgemäßes Licht (211) ausgebildet ist, wobei, wenn die äußere Linse (202) an das Gehäuse (201) und den Lichtleiter für vorschriftsgemäßes Licht (211) geschweißt ist, um eine dichte Einhausung auszubilden, der mittlere Abschnitt (213) innerhalb der Aussparung (218) gelagert ist, wobei die Lampeneinhausung wetterfest ist.

2. Lampenanordnung (200) nach Anspruch 1, wobei das Licht von dem Lichtleiter (211) mit einer im Wesentlichen einheitlichen Leuchtdichte ausgegeben wird.

3. Lampenanordnung (200) nach einem der vorangehenden Ansprüche, wobei die Ebene eine horizontale Ebene ist.

4. Lampenanordnung (200) nach einem der vorangehenden Ansprüche, wobei die lichtemittierende Oberfläche (214) des Lichtleiters (211) eine Oberflächenoptik zum Streuen von von der lichtemittierenden Oberfläche (214) ausgegebenem Licht umfasst.

5. Lampenanordnung (200) nach einem der vorangehenden Ansprüche, wobei das Gehäuse (201), mit Ausnahme des Lichtleiters (211), der einen Teil des Gehäuses (201) ausbildet, opak ist.

6. Lampenanordnung (200) nach einem der vorangehenden Ansprüche, wobei der Lichtleiter (211) durchsichtig ist.

7. Lampenanordnung (200) nach einem der vorangehenden Ansprüche, wobei der längliche Lichtkanal (206) entlang seiner Länge eine im Wesentlichen einheitliche Lichtstärke aufweist.

8. Lampenanordnung (200) nach Anspruch 7, wobei die im Wesentlichen einheitliche Lichtstärke entlang der Länge durch Folgendes erreicht wird:
- Verwenden einer Oberflächenoptik entlang der Länge, um das Licht gleichmäßig entlang der Länge zu verteilen, oder
- indem der Lichtkanal (206) mit lichtstreuenden Partikeln gefüllt ist, wobei die meisten Lichtstrahlen, die in den Lichtkanal (206) eintreten, auf die lichtstreuenden Partikel treffen, die die Richtung von Lichtstrahlen ändern, wobei diese Lichtstreuung darin besteht, dass Lichtstrahlen derart in dem gesamten Lichtkanal (206) verteilt werden, dass eine gleichmäßige Verteilung von Licht, das von der lichtemittierenden Oberfläche (206a) ausgegeben wird, gegeben ist.

9. Lampenanordnung (200) nach einem der vorangehenden Ansprüche, wobei der längliche Lichtkanal (206) an seinem ersten und seinem zweiten Ende von einer ersten End-PCB (207) und einer Lichtquelle (208) und einer zweiten End-PCB (209) und einer anderen Lichtquelle (210) beleuchtet wird.

## Revendications

1. Ensemble lampe (200) conçu pour être intégré à un ensemble rétroviseur extérieur (100) pour un véhicule, comprenant :
- un boîtier (201) ;
- une lentille externe (202) recouvrant partiellement le boîtier (201) pour définir une enceinte entre le boîtier (201) et la lentille (202) ;
- une source lumineuse à diode électroluminescente (LED) (217) disposée dans l'enceinte ; et
- un guide de lumière (211) faisant partie du boîtier (201), le guide de lumière (211) ayant une surface de réception de lumière (212) à l'intérieur de l'enceinte et une surface émettrice de lumière (214) hors de l'enceinte, de telle sorte que de la lumière émise par la source lumineuse à LED (217) est accueillie par la surface de réception de lumière (212) du guide de lumière (211) et dirigée vers la surface émettrice de lumière (214) du guide de lumière (211), de telle sorte que de la lumière est émise par le guide de lumière (211),
l'ensemble lampe (200) fournissant une lumière cosmétique conçue pour fournir une sortie lumineuse vers l'avant du véhicule, de façon générale, et une lumière de conformité conçue pour fournir une sortie lumineuse sur un angle de vue d'au moins 55 degrés dans un plan, le guide de lumière (211) étant un guide de lumière de conformité (211) muni d'une section médiane (213) avec une zone de section transversale réduite, et
**caractérisé en ce que**
la lentille externe (202) comprend une partie interne opaque (203) et une partie externe transmettant la lumière (205), la partie interne opaque (203) comprenant une ouverture allongée (204) pour permettre à la lumière d'être transmise par la partie externe (205) avec un conduit de lumière cosmétique (206) allongé, lequel est compris en outre dans l'ensemble lampe (200) pour guider de la lumière à partir d'au moins une source lumineuse (208) vers une surface émettrice de lumière (206a) allongée, laquelle est accueillie dans l'enceinte de telle sorte que la surface émettrice de lumière (206a) du conduit de lumière (206) est adjacente à l'ouverture allongée (204) de la partie interne, et
la lentille externe (202) étant munie d'une découpe (218) complétant la section médiane (213) du guide de lumière de conformité (211), la section médiane (213) étant emboîtée dans la découpe (218) lorsque la lentille externe (202) est soudée au boîtier (201) et au guide de lumière de conformité (211) pour former une enceinte étanche, l'enceinte de lampe étant imperméable.

2. Ensemble lampe (200) selon la revendication 1, la lumière sortant du guide de lumière (211) avec une luminance essentiellement uniforme.

3. Ensemble lampe (200) selon l'une quelconque des revendications précédentes, le plan étant un plan horizontal.

4. Ensemble lampe (200) selon l'une quelconque des revendications précédentes, la surface émettrice de lumière (214) du guide de lumière (211) comprenant une optique de surface pour diffuser l'émission de lumière de la surface émettrice de lumière (214).

5. Ensemble lampe (200) selon l'une quelconque des revendications précédentes, le boîtier (201) étant opaque, à l'exception du guide de lumière (211) faisant partie du boîtier (201).

6. Ensemble lampe (200) selon l'une quelconque des revendications précédentes, le guide de lumière (211) étant transparent.

7. Ensemble lampe (200) selon l'une quelconque des revendications précédentes, le conduit de lumière (206) allongé ayant une intensité lumineuse essentiellement uniforme sur sa longueur.

8. Ensemble lampe (200) selon la revendication 7, l'intensité lumineuse essentiellement uniforme sur sa longueur étant obtenue par
- utiliser une optique de surface sur sa longueur pour distribuer la lumière de façon uniforme sur sa longueur, ou
- le conduit de lumière (206) étant rempli avec des particules à diffusion de lumière, la plupart des rayons lumineux entrant dans le conduit de lumière (206) rencontrant les particules à diffusion de lumière qui modifient la direction des rayons lumineux, cette diffusion de lumière étant elle que des rayons lumineux sont diffusés à travers le conduit de lumière (206) de telle sorte qu'une distribution régulière de l'émission de lumière de la surface émettrice de lumière (206a) se produit.

9. Ensemble lampe (200) selon l'une quelconque des revendications précédentes, le conduit de lumière (206) allongé étant éclairé à ses première et deuxième extrémités par un premier PCB (207) et la source lumineuse (208) et par un deuxième PCB (209) et une autre source lumineuse (210).
